# EUROPÄISCHE PATENTSCHRIFT

(11) **EP 1 347 278 B1**
(45) Veröffentlichungstag und Bekanntmachung des Hinweises auf die Patenterteilung: **03.08.2005**
(21) Anmeldenummer: 02100273.8
(22) Anmeldetag: 18.03.2002
(51) Int. Cl.: G01G 23/48, G01G 3/18

(54) **Kraftmesszelle für eine Waage und Waage**
Force-measuring transducer for a weighing device and weighing device
Transducteur de mesure de force pour une balance et balance

(43) Veröffentlichungstag der Anmeldung: 24.09.2003
(73) Patentinhaber: Mettler-Toledo GmbH, 8606 Greifensee (CH)
(72) Erfinder: Loher, Urs, 8606, Nänikon (CH); Tellenbach, Jean-Maurice, 8442, Hettlingen (CH); Bucher, Cyrill, 8308, Bassersdorf (CH)

(56) Entgegenhaltungen:
- EP-A- 0 319 176
- EP-A- 0 702 220

## Beschreibung

Die Erfindung betrifft eine Kraftmesszelle für eine Waage sowie eine Waage mit dieser Kraftmesszelle nach dem Oberbegriff des Patentanspruchs 1 bzw. 11.

Kraftmesszellen von Waagen sind oft mit einem Kraftaufnehmer versehen, der einerseits mit einem als Abstützung dienenden Waagengehäuse und andererseits mit einem Waagschalenträger verbunden ist, über den die Einleitung der zu messenden Kraft erfolgt.

Wie in [1], DE 199 39 633 A1 beschrieben, weist der Kraftaufnehmer, der in [2], EP 0 670 479 A1 als "counterforce" oder "force receiver" bezeichnet ist, einen Verformungskörper auf, der ein gehäusefest montierbares Teil des Kraftaufnehmers mit dessen der Krafteinleitung bzw. der Lastaufnahme dienendem Teil verbindet. Zwischen dem Verformungskörper und den mit dem Waagengehäuse und dem Waagschalenträger zu verbindenden Anschlussteilen weist der Kraftaufnehmer normalerweise Einschnitte auf, die der Entkopplung des Verformungskörpers dienen, an dem die durch Krafteinwirkungen bewirkte Verformungen mittels Sensoren, vorzugsweise Dehnmessstreifen, gemessen werden.

Der Verformungskörper ist vorzugsweise als Messparallelogramm mit parallelogrammartig geführten Schenkeln ausgebildet (siehe z.B. [5], EP 0 511 521 A1).

Das mittels der vorzugsweise in einer Brückenschaltung integrierten Dehnmessstreifen gebildete analoge Messsignal wird oft in einer nachfolgenden Wandlerschaltung digitalisiert und anschliessend weiter verarbeitet. Der Aufbau einer Brückenschaltung mit Dehnmessstreifen ist beispielsweise in [4], U. Tietze, Ch. Schenk, Halbleiterschaltungstechnik, 11. Auflage, 1. Nachdruck, Springer Verlag, Berlin 1999, Seiten 1242-1243 beschrieben.

Zur Weiterverarbeitung der digitalisierten Messsignale weist die in [2] beschriebene Messzelle ein Speichermodul auf, in dem der Messzelle zugehörige Kompensationsdaten gespeichert sind, mittels derer die Messsignale korrigierbar sind.

Wie in [3], britische Patent schrift GB 1 462 808 beschrieben, sind dabei insbesondere Fehler zu korrigieren, die durch Unlinearitäten, Hystereseeffekte, Temperatureinflüsse und Kriechen verursacht werden. Die dazu notwendigen Kompensationsdaten werden bei der Herstellung im Werk durch eigens dafür vorgesehene Prüf- und Messverfahren gewonnen und im Speichermodul abgelegt (siehe auch [1]).

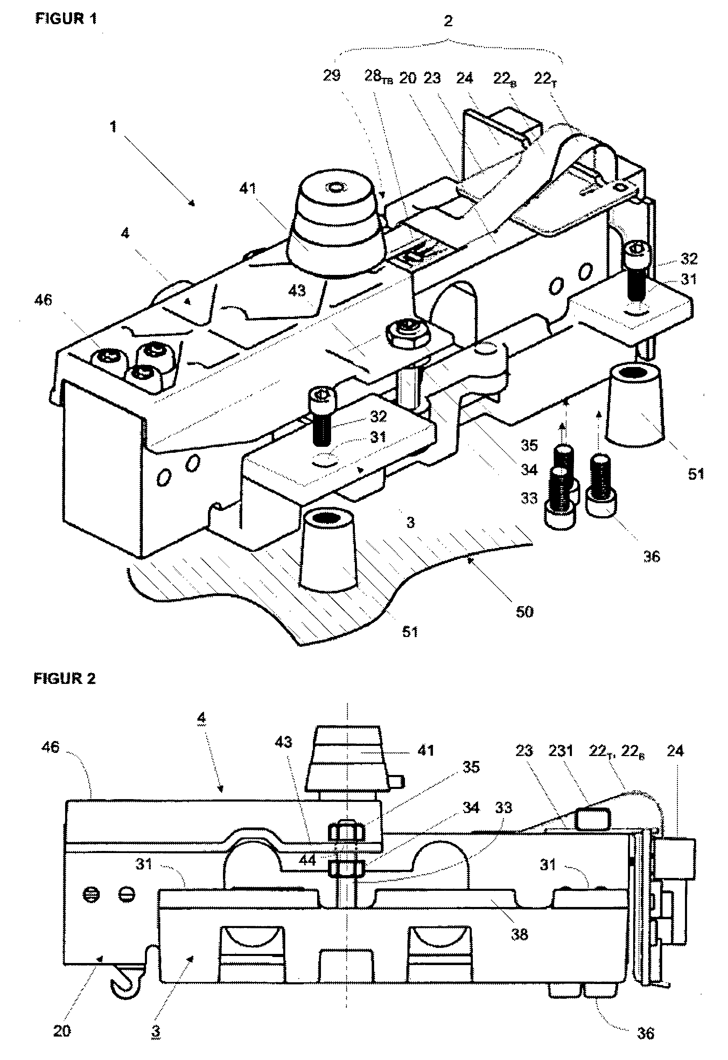

Vorzugsweise werden Messabweichungen durch entsprechende Ausgestaltung der Messzelle jedoch möglichst klein gehalten, so dass nur geringfügige Kompensationen notwendig sind. In [6], europäische Patentanmeldung EP 0 702 220 A1 wird dazu vorgeschlagen, die vier Dehnmessstreifen der Messbrücke, dem Abgleich der Brücke dienende Abgleichwiderstände sowie der Korrektur von Temperaturabweichungen der Dehnmessstreifen und des Verformungskörpers dienende temperaturabhängige Widerstände in einer in Dünnfilmtechnik gefertigten gedruckten Schaltung zu integrieren. Die gedruckte Schaltung ist breitflächig mit dem Verformungskörper verbunden und mittels eines flexiblen Flachbandkabels mit einer zur Verarbeitung des Ausgangssignals der Brückenschaltung dienenden Schaltungsanordnung verbunden (siehe auch [2], Figur 2).

Bei der Anordnung einer gedruckten Schaltung auf dem Verformungskörper besteht jedoch die Gefahr, dass dessen Messverhalten ungünstig beeinflusst wird. Oft wird daher ein einfacherer Aufbau der Messzelle bevorzugt, bei dem lediglich die Dehnmessstreifen auf dem Verformungskörper angeordnet, zu einer Messbrücke zusammengeschaltet und mittels Anschlussleitungen mit einer Schaltungsanordnung verbunden werden. Dabei wäre es wünschenswert auch derartig aufgebaute Messzellen hinsichtlich des Temperaturverhaltens weiter zu optimieren, so dass sich zu kompensierende Messabweichungen reduzieren.

Der vorliegenden Erfindung liegt daher die Aufgabe zugrunde, eine derart verbesserte Kraftmesszelle für eine Waage sowie eine für die Aufnahme der Kraftmesszelle geeignete Waage zu schaffen.

Bei der Kraftmesszelle sollen insbesondere störende Einwirkungen auf das Messverhalten des Kraftaufnehmers und der Messbrücke vermieden werden.

Ferner soll das einwandfrei Funktionieren der Kraftmesszelle auch über eine längere Betriebsdauer gewährleistet werden können.

Ferner soll die Kraftmesszelle einfach und kostengünstig aufgebaut sein und mit geringem Aufwand gewartet werden können.

Diese Aufgaben werden mit einer Kraftmesszelle und einer Waage gelöst, welche die in Anspruch 1 bzw. 11 angegebenen Merkmale aufweisen. Vorteilhafte Ausgestaltungen der Erfindung sind in weiteren Ansprüchen angegeben.

Die erfindungsgemässe Kraftmesszelle ist mit einem Kraftaufnehmer versehen, der einen mit Sensoren versehenen Verformungskörper aufweist, welcher ein gehäusefest montierbares Teil des Kraftaufnehmers mit dessen der Krafteinleitung dienendem Teil verbindet. Die Sensoren sind mit Leiterbahnen wenigstens eines Flachbandkabels verbunden, das an ein zur Verarbeitung der Messsignale dienendes Schaltungsmodul anschliessbar ist, durch das die Sensoren zu einer Messbrücke zusammen geschaltet werden. Erfindungsgemäss sind die Leiterbahnen derart ausgestaltet, dass alle resultierenden Verbindungsleitungen von den Knotenpunkten der Messbrücke zu den Anschlüssen der Sensoren zumindest annähernd denselben Widerstandswert aufweisen.

Dazu weisen die Leiterbahnen, die mit entfernter liegenden Sensoren verbunden sind, zumindest abschnittweise einen vergrösserten Leitungsquerschnitt auf. Besonders einfach kann dies durch Verwendung von Flachbandkabeln geschehen, deren Substrat ein flexibles Band oder eine Folie ist, auf dem die Leiterbahnen in entsprechenden Abmessungen aufgedruckt sind. Der Begriff Flachbandkabel ist hier und im Folgenden für jegliche Art von bandartiger, flexibler elektrischer Verbindung mittels mindestens eines Leiters zu verstehen und insbesondere für auf einem Trägermaterial aufgebrachte Leiterbahnen.

Die Verbindungsleitungen vom Schaltungsmodul zu den Anschlüssen der Sensoren können zudem aus Teilabschnitten bestehen, die unterschiedliche Abmessungen aufweisen und/oder die für wenigstens zwei Sensoren gemeinsam genutzt werden.

Besonders einfach und präzise kann der Anschluss der Sensoren mit zwei Flachbandkabeln erfolgen, von denen das erste die auf der Oberseite des Verformungskörpers angeordneten Sensoren und das zweite die auf der Unterseite des Verformungskörpers angeordneten Sensoren mit dem Schaltungsmodul verbindet.

Die Flachbandkabel können zudem weitere Leiterbahnen aufweisen, mittels derer beispielsweise ein auf dem Verformungskörper angeordneter Temperaturfühler mit dem Schaltungsmodul verbindbar ist.

Es wurde zudem festgestellt, dass bei Kraftmesszellen mit hochohmigen Dehnmessstreifen, die an Flachbandkabel angeschlossen sind, Instabilitäten und langsam ansteigende Messabweichungen auftreten können.

Diese Probleme lassen sich erfindungsgemäss durch die Verwendung von Flachbandkabeln vermeiden, die an den Enden, im Anschlussbereich der Sensoren, derart mit einer Ausnehmung versehen sind, dass der Bereich zwischen den Anschlusskontakten der Sensoren, nach dem Anschluss eines Flachbandkabels, frei zugänglich bleibt. Gegebenenfalls nach dem Verlöten der Anschlüsse verbleibende Rückstände des Flussmittels oder weitere Verunreinigungen zwischen den Anschlusskontakten können daher problemlos beseitigt werden, wodurch Restleitwerte und dadurch verursachte Kriechströme vermieden werden. Nach einer längeren Betriebsdauer können erfindungsgemässe Kraftmesszellen zudem mit geringem Wartungsaufwand wieder instand gestellt werden, zum Beispiel kann einfaches Reinigen allein genügen.

Nachfolgend wird die Erfindung anhand von Zeichnungen näher erläutert. Dabei zeigt:
- Figur 1: eine mit einem Waagschalenträger 4 und einem Befestigungsteil 3 verschraubte erfindungsgemässe Kraftmesszelle 2, die aus einem mit Sensoren 28, 29 versehenen Kraftaufnehmer 20 und einem Schaltungsmodul 24 besteht,
- Figur 2: eine Seitenansicht der modularen Kraftmesszelle 2 von Figur 1,
- Figur 3: den Kraftaufnehmer 20 der modularen Kraftmesszelle 2 von Figur 1 mit Schrauben 36, 46, 231 zur Befestigung des mit einem Waagengehäuse 5 verbindbaren Befestigungsteils 3, des Waagschalenträgers 4 und eines Metallelements 23, welches zum Halten des Schaltungsmoduls 24 dient,
- Fig. 4: die Kraftmesszelle 2 von oben, mit zwei voneinander getrennten Flachbandkabeln 22_{T}, 22_{B}, mittels derer das Schaltungsmodul 24 mit den Sensoren 28, 29 verbunden ist,
- Figur 5: den modularen Aufbau eines bevorzugten Schaltungsmoduls 24, das mittels der Anschlussleitungen 22_{T}, 22_{B} mit den Sensoren 28, 29 sowie über eine weitere Anschlussleitung 500 mit einem Prozessormodul 501 verbunden ist,
- Figur 6: den Bereich einer Kraftmesszelle, in dem ein Flachbandkabel 22 in bekannter Weise an ein mit einem Dehnmessstreifen versehenes Modul 220 angeschlossen ist und
- Figur 7: ein erfindungsgemäss an das in Figur 6 gezeigte Modul 220 angeschlossenes, mit einer Ausnehmung 224 versehenes Flachbandkabel 22.
Figur 1 und Figur 2 zeigen eine mittels Schrauben 36, 46 mit einem Waagschalenträger 4 und einem Befestigungsteil 3 verbundene modulare Kraftmesszelle 2, die aus einem mit Dehnmessstreifen 28_{TF}, 28_{TB}, 28_{BF}, 28_{BB} und einem Temperaturfühler 29 versehenen Kraftaufnehmer 20 und einem Schaltungsmodul 24 besteht.

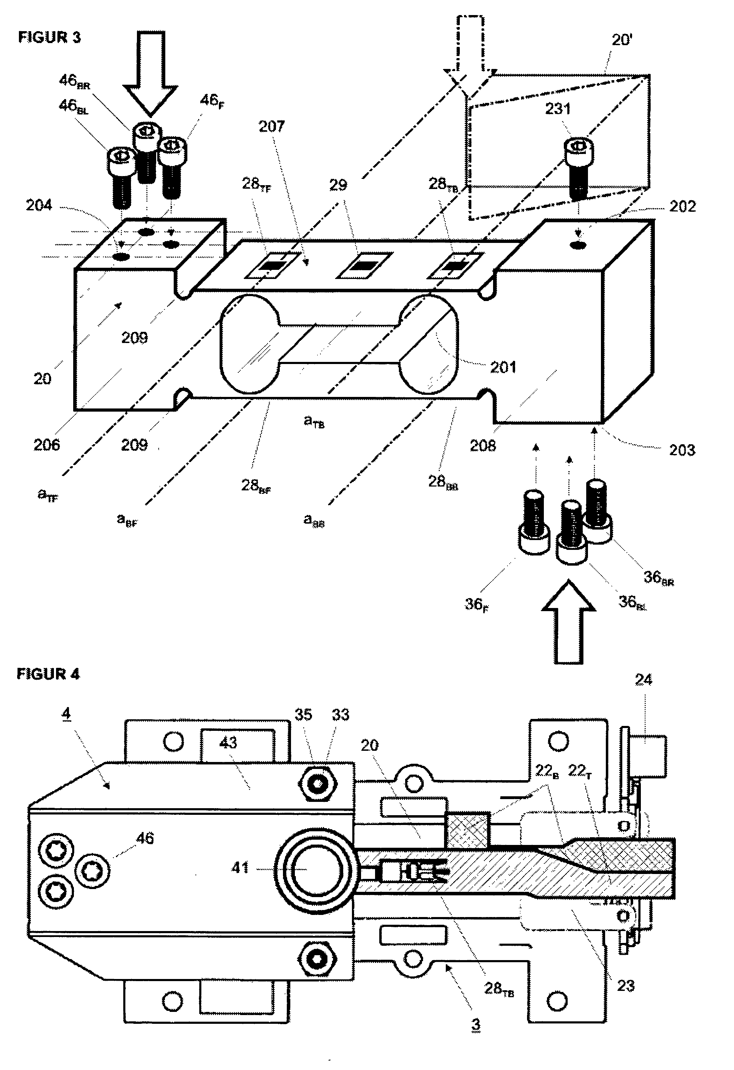

Die Dehnmessstreifen 28_{TF}, 28_{TB}, 28_{BF}, 28_{BB} sind, wie in Figur 4 gezeigt, mittels zwei getrennt voneinander geführter, flexibler Flachbandkabel 22_{T}, 22_{B} mit dem Schaltungsmodul 24 verbunden und dort zu einer Messbrücke zusammengeschaltet, wie sie in [4], Seiten 1242-1243 beschrieben ist.

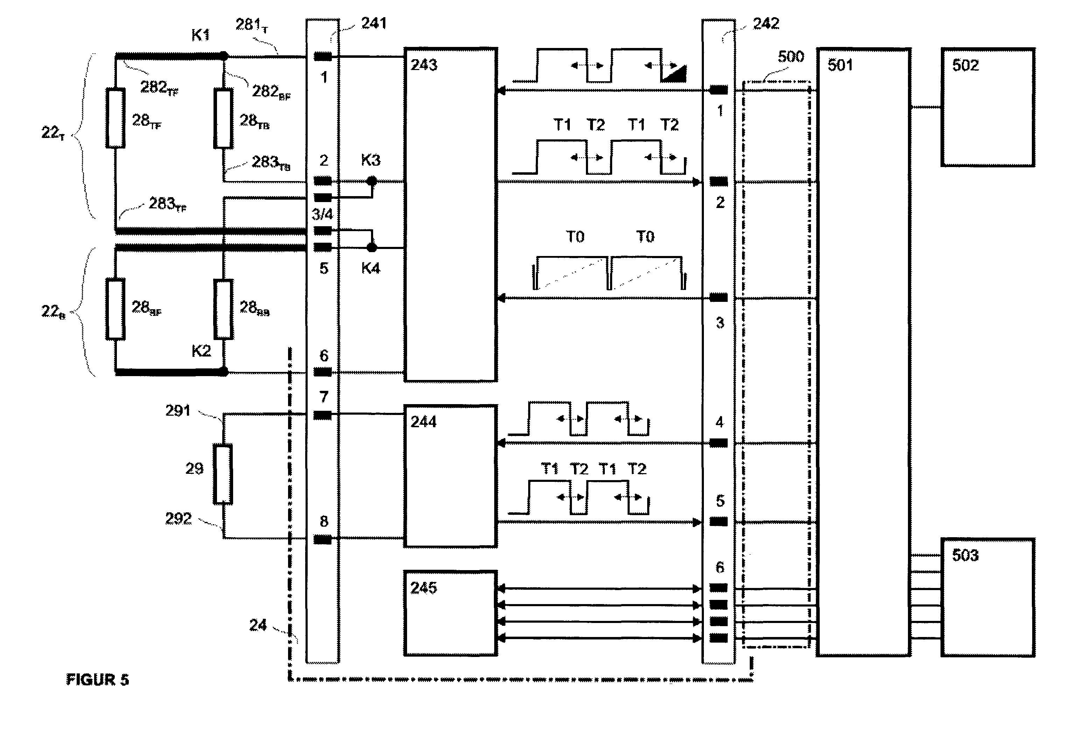

Wie in Figur 5 gezeigt, weist das mittels eines winkelförmigen Metallelements 23 mechanisch und thermisch mit dem Kraftaufnehmer gekoppelte Schaltungsmodul 24 ein zur Aufnahme von Kompensationsdaten dienendes Speichermodul 245 und wenigstens eine zur Wandlung analoger Messsignale dienende Schaltungsanordnung 243, 244 auf.

Die in einer vorzugsweisen Ausgestaltung gezeigte Kraftmesszelle 2 kann daher als Modul in eine Waage eingebaut und, sofern notwendig, mit geringem Aufwand wieder ausgetauscht werden.

Der in Figur 3 gezeigte Kraftaufnehmer 20 der Messzelle 2 von Figur 1 weist einen Verformungskörper 207 auf, der als Messparallelogramm (siehe Figur 3, 201) ausgebildet ist. Der Verformungskörper 207 verbindet ein gehäusefest montierbares Teil 208 des Kraftaufnehmers 20 mit dessen der Krafteinleitung bzw. der Lastaufnahme dienendem Teil 206. Zur Entkopplung des Verformungskörpers 207 sind angrenzend an das mit dem Befestigungsteil 3 und das mit dem Waagschalenträger 4 zu verbindende Teil 208 bzw. 206 Einschnitte 209 vorgesehen. An den Stellen, welche virtuell die Ecken des Messparallelogramms bilden, weist der Verformungskörper 207 mit den Dehnmessstreifen 28_{TF}, 28_{TB}, 28_{BF}, 28_{BB} versehene Dünnstellen auf, durch die senkrecht zum Messparallelogramm stehende Biegeachsen a_{TF}, a_{TB}, a_{BF}, a_{BB} verlaufen.

In der Mitte der Oberseite des Verformungskörpers 207 ist zudem ein für die Temperaturkompensation verwendeter Temperaturfühler 29 angeordnet, der aufgrund des normalerweise in Längsrichtung verlaufenden Temperaturgradienten einen mittleren Wert der Temperaturen innerhalb des Verformungskörpers 207 misst, wodurch eine präzisere Korrektur von durch Temperaturschwankungen verursachten Messabweichungen möglich wird.

Figur 5 zeigt ferner in einer vorzugsweisen Ausgestaltung den modularen Aufbau des Schaltungsmoduls 24, das über Anschlussleisten 241, 242 und Anschlussleitungen 22_{T}, 22_{T}□□ 22_{B} bzw. 500 einerseits mit den Dehnmessstreifen 28_{TF}, 28_{TB}, 28_{BF}, 28_{BB} sowie einem Temperaturfühler 29 und andererseits mit einem Prozessormodul 501 verbunden ist, an das eine Anzeige 502 und ein Schnittstellenmodul 503 angeschlossen sind. Das Prozessormodul 501 ist innerhalb der Waage getrennt vom Schaltungsmodul 24 angeordnet und von diesem daher thermisch entkoppelt. Die vom Prozessormodul 501 erzeugte Verlustwärme bleibt daher ohne Einfluss auf die Kraftmesszelle 2.

Das Schaltungsmodul 24 weist zwei Wandlerschaltungen 243, 244 auf. Mittels der ersten Wandlerschaltung 243 wird das von der aus den Dehnmessstreifen 28_{TF}, 28_{TB}, 28_{BF}, 28_{BB} gebildeten Messbrücke abgegebene analoge Signal und mittels der zweiten Wandlerschaltung 244 wird das vom Temperaturfühler 29 abgegebene analoge Signal in zweiwertige pulsweitenmodulierte Signale pwm1, pwm2 gewandelt, über die Verbindungsleitung 500 zum Prozessormodul 501 übertragen und von diesem weiter verarbeitet. Vorzugsweise nach der Inbetriebsetzung der Waage werden vom Prozessormodul 501 dazu die Kompensationsdaten aus dem Speichermodul 245 abgerufen, mittels derer Messabweichungen kompensierbar sind.

Aus [4], Seite 1243-1250 sowie [6] ist bekannt, dass Sensoren störende Temperaturkoeffizienten aufweisen können und daher eine Temperaturkompensation notwendig ist. Bei der Entwicklung der in Figur 1 gezeigten Kraftmesszelle 2 wurde hingegen erkannt, dass bei hoher Messauflösung, nebst den Temperaturkoeffizienten der Sensoren auch die Temperaturkoeffizienten der Verbindungsleitungen innerhalb der mit den Sensoren versehenen Messbrücke von Bedeutung sind. Anstelle der Kompensation der resultierenden Messabweichungen, werden diese mittels folgender Lösung praktisch vollständig vermieden.

Dazu werden die Leiterbahnen 281, 282, 283 des oder der Flachbandkabel 22_{T}, 22_{B}, welche die Dehnmessstreifen 28_{TF}, 28_{TB}, 28_{BF}, 28_{BB} mit dem Schaltungsmodul 24 verbinden, in dem die Sensoren 28_{TF}, 28_{TB}, 28_{BF}, 28_{BB} zu einer Messbrücke zusammen geschaltet werden, derart ausgestaltet, dass alle resultierenden Verbindungsleitungen von den Knotenpunkten der Messbrücke zu den Anschlüssen 280 der Sensoren 28_{TF}, 28_{TB}, 28_{BF}, 28_{BB} zumindest annähernd denselben Widerstandswert aufweisen. Unter der Voraussetzung, dass alle Leiterbahnen 281, 282, 283 jeweils dieselben Temperaturänderungen erfahren, kompensieren sich in der Messbrücke daher die resultierenden Widerstandsänderungen der Verbindungsleitungen.

Vorzugsweise werden die Leiterbahnen 281, 282, 283, welche die Verbindungsleitungen der Messbrücke bilden, daher mit dem Kraftaufnehmer 20 thermisch gekoppelt, so dass diese Leiterbahnen 281, 282, 283 bei auftretenden Temperaturverschiebungen jeweils gleiche Widerstandsänderungen erfahren. Zu diesem Zweck werden die Flachbandkabel 22_{T}, 22_{B} vorzugsweise mittels eines Klebstoffs mit dem Kraftaufnehmer 20 verbunden.

Aufgrund des modularen Aufbaus der Kraftmesszelle 2, mit der thermischen Kopplung von Schaltungsmodul 24 und Kraftaufnehmer 20, können daher ausgezeichnete Resultate erzielt werden. Selbstverständlich ist die Erfindung auch bei nicht modularen Kraftmesszellen vorteilhaft einsetzbar, in denen keine Messelektronik integriert ist.

Gleiche Widerstandswerte für die Verbindungsleitungen der Messbrücke können mit verschiedenen Massnahmen erzielt werden. Vorzugsweise werden Leiterbahnen 282, 283, die mit entfernter liegenden Sensoren 28_{TF}, 28_{BF} verbunden sind, zumindest abschnittweise mit einem vergrösserten Leitungsquerschnitt versehen. Andere Massnahmen zur Angleichung der Widerstandswerte, wie etwa die Verwendung von Litzen oder Drähten gleicher Länge ungeachtet der unterschiedlichen Distanzen oder eine dem Querschnitt angepasste Länge durch mäandern sind dem Fachmann vertraut.

Besonders einfach und präzise kann der Anschluss der Sensoren 28_{TF}, 28_{TB}, 28_{BF}, 28_{BB} mittels zweier Flachbandkabel 22_{T}, 22_{B} erfolgen, von denen das erste die auf der Oberseite des Verformungskörpers 20 angeordneten Sensoren 28_{TF}, 28_{TB} und das zweite die auf der Unterseite des Verformungskörpers 20 angeordneten Sensoren 28_{BF}, 28_{BB} mit dem Schaltungsmodul 24 verbindet.

Die Verbindungsleitungen zu den Anschlüssen der Sensoren 28_{TF}, 28_{TB}, 28_{BF}, 28_{BB} können zudem aus Teilabschnitten 281_{TF}, 282_{TF}, 283_{TF}; ... , 283_{TB}; ... bestehen, die unterschiedliche Abmessungen aufweisen und/oder die für wenigstens zwei Sensoren gemeinsam genutzt werden.

In der in Figur 5 gezeigten Schaltungsanordnung sind auf jedem Flachbandkabel 22_{T}; 22_{B} je zwei an verschiedene Sensoren 28_{TF}, 28_{TB}; 28_{BF}, 28_{BB} angeschlossene Leiterbahnen 282_{TF}, 282_{BF}, ... zu einem Knotenpunkt K1; K2 der Messbrücke zusammengeführt, der mittels einer einzigen Leitung 281_{T} mit dem Schaltungsmodul 24 verbunden ist. Anstelle von acht Anschlusskontakten werden daher nur sechs Anschlusskontakte 241-1, 241-2, 241-3, 241-4, 241-5, 241-6 auf dem Schaltungsmodul 24 benötigt. Weitere Leiterbahnen werden über Anschlusskontakte 241-2, 241-3, 241-4, 241-5 ins Schaltungsmodul 24 geführt und erst dort zu je einem Knoten K3, K4 verbunden.

Die Flachbandkabel können zudem weitere Leiterbahnen 291, 292 (siehe Figur 5) aufweisen, mittels derer beispielsweise ein auf dem Verformungskörper 20 angeordneter Temperaturfühler 29 mit dem Schaltungsmodul 24 verbindbar ist.

Es wurde zudem festgestellt, dass bei Kraftmesszellen mit hochohmigen Dehnmessstreifen, die an Flachbandkabel angeschlossen sind, Instabilitäten und langsam ansteigende Messabweichungen auftreten können.

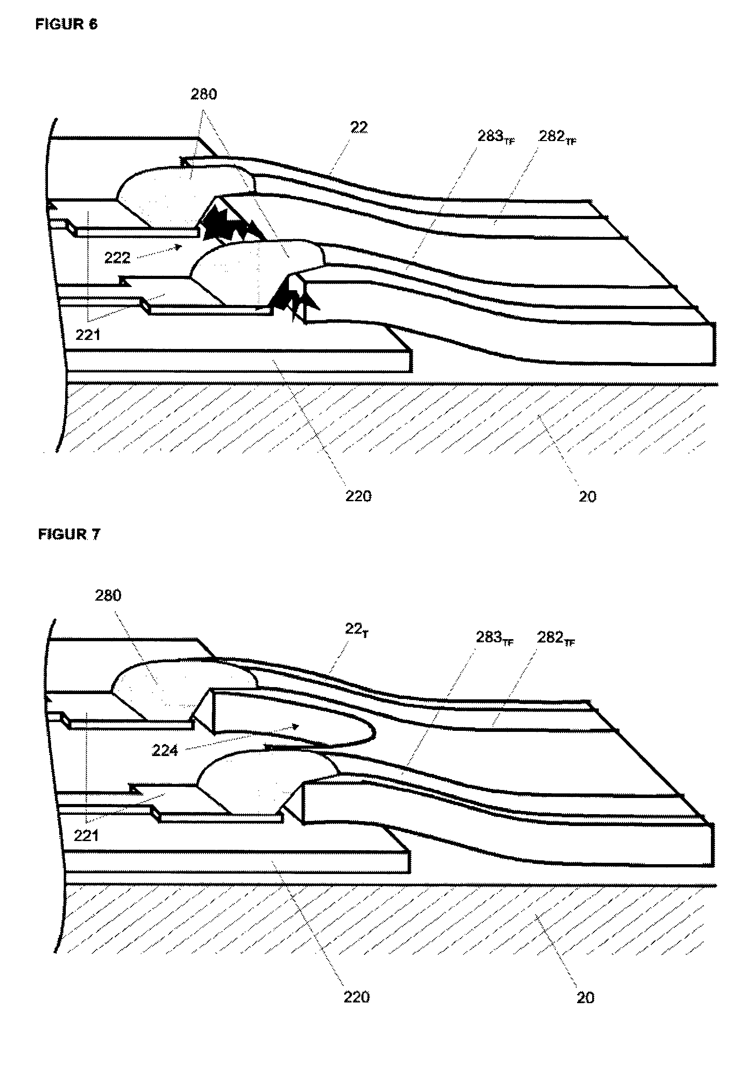

Figur 6 zeigt den Bereich einer Kraftmesszelle, in dem die Leiterbahnen 282_{TF}, 283_{TF} eines Flachbandkabels 22 in bekannter Weise an Anschlusskontakte 221 eines mit einem hochohmigen Dehnmessstreifen versehenen Moduls 220 angeschlossen sind. Durch den Lötvorgang oder andere Einwirkungen sind am frontseitigen Ende des Flachbandkabels 22, angrenzend an die mittels Lötverbindungen 280 mit den Leiterbahnen 282_{TF}, 283_{TF} verbundenen Anschlusskontakte 221, Verunreinigungen 222 aufgetreten, die einen nicht vernachlässigbaren Übergangsleitwert zwischen den Anschlusskontakten 221 bilden, so dass durch in diesem Übergangsleitwert auftretende Kriechströme störende Messabweichungen verursacht werden.

Aus Figur 6 ist ferner ersichtlich, dass sich die Verunreinigungen 222 am frontseitigen Ende des Flachbandkabels 22 sammeln und kaum beseitigt werden können.

Figur 7 zeigt ein erfindungsgemäss an das in Figur 6 gezeigte Modul 220 angeschlossenes Flachbandkabel 22, das derart mit einer Ausnehmung 224 versehen ist, dass der Bereich zwischen den Anschlusskontakten 221 des Moduls 220 frei zugänglich ist.

Gegebenenfalls nach dem Anbringen der Lötverbindung 280 verbleibende Rückstände des Flussmittels oder weitere Verunreinigungen zwischen den Anschlusskontakten 221 können daher problemlos beseitigt werden, wodurch Restleitwerte und dadurch verursachte Kriechströme vermieden werden. Nach einer längeren Betriebsdauer können erfindungsgemässe Kraftmesszellen 2 zudem auch mit geringem Wartungsaufwand durch Reinigung wieder instand gestellt werden.

Der Einbau der in Figur 1 gezeigten modularen Messzelle 2 in eine Waage erfolgt mittels eines U-profilförmigen, mit Flügelelementen 38 versehenen Befestigungsteils 3, mit dem das gehäusefest montierbare Teil 208 des Kraftaufnehmers 20 mittels Schrauben 36 verschraubt wird. Die Flügelelemente 38 des Befestigungsteils 3 sind mit Bohrungen 31 versehen, durch die Schrauben 32 führbar sind, mittels derer das Befestigungsteil 3 mit innerhalb des Waagengehäuses 5 entsprechend vorgesehenen, Gewindeeinsätze aufweisenden Stützelementen 51 verschraubt werden kann.

Das der Krafteinleitung bzw. der Lastaufnahme dienende Teil 206 des Kraftaufnehmers 20 ist mittels Schrauben 46 mit einem Waagschalenträger 4 verschraubt, der einen Waagschalenaufnahmekonus 41 aufweist.

Aus Figur 2 ist ferner ersichtlich, dass ein Seitenteil 43 des Waagschalenträgers 4 mit einer Bohrung 44 versehen ist, durch die ein mit einem Gewinde versehener und mit dem Befestigungsteil 3 verbundener Bolzen 33 geführt ist. Der Bolzen 33 ist mit zwei Schraubenmuttern 34, 35 versehen, die derart justierbar sind, dass die Auslenkung des Waagschalenträgers 4 bzw. des Seitenteils 43 nach unten und nach oben beschränkt ist, wodurch eine Überlastung der modularen Messzelle durch Zug oder Druck verhindert wird.

Die erfindungsgemässe Lösung wurde im wesentlichen unter Bezugnahme auf die neu geschaffene, modulare Kraftmesszelle von Figur 1 beschrieben. Aufgrund obiger Informationen ist der Fachmann jedoch in der Lage, die Erfindung in anderen Messzellen und Messsystemen anzuwenden. Besonders vorteilhaft kann die Erfindung auch in Druckmesssystemen angewendet werden, in denen Dehnmessstreifen auf einer Membran angeordnet sind (siehe [4], Seiten 1242, 1243).

Literaturverzeichnis
[1] Deutsche Offenlegungsschrift DE 199 39 633 A1
[2] Europäische Patentanmeldung EP 0 670 479 A1
[3] Britische Patent schrift GB 1 462 808
[4] U. Tietze, Ch. Schenk, Halbleiterschaltungstechnik, 11. Auflage, 1. Nachdruck, Springer Verlag, Berlin 1999
[5] Europäische Patentanmeldung EP 0 511 521 A1
[6] Europäische Patentanmeldung EP 0 702 220 A1

## Patentansprüche

1. Kraftmesszelle (2) mit einem Kraftaufnehmer (20), der einen mit Sensoren (28_{TF}, 28_{TB}, 28_{BF}, 28_{BB}), insbesondere Dehnmessstreifen, versehenen Verformungskörper (207) aufweist, welcher ein gehäusefest montierbares Teil (208) des Kraftaufnehmers (20) mit dessen der Krafteinleitung dienendem Teil (206) verbindet, wobei die Sensoren (28_{TF}, 28_{TB}, 28_{BF}, 28_{BB}) mit elektrischen Leitern (281, 282, 283) verbunden sind, die an ein zur Verarbeitung der Messsignale dienendes Schaltungsmodul (24) anschliessbar sind, **dadurch gekennzeichnet, dass** das Schaltungsmodul (24) vom Verformungskörper (207) abgesetzt mit dem Kraftaufnehmer (20) gekoppelt ist, die Sensoren (28_{TF}, 28_{TB}, 28_{BF}, 28_{BB}) im Schaltungsmodul (24) zu einer Messbrücke zusammen geschaltet sind und die Leiter (281, 282, 283) derart ausgestaltet sind, dass alle resultierenden Verbindungsleitungen von den Knotenpunkten (K1, ..., K4) der Messbrücke zu den Anschlüssen (280) der Sensoren (28_{TF}, 28_{TB}, 28_{BF}, 28_{BB}) im Wesentlichen denselben Widerstandswert aufweisen.

2. Kraftmesszelle (2) nach Anspruch 1, **dadurch gekennzeichnet, dass** Leiter von unterschiedlicher Länge zumindest abschnittweise unterschiedliche Leitungsquerschnitte aufweisen, wobei die Leitungsquerschnitte der längeren Leiter grösser sind als jene der kürzeren Leiter.

3. Kraftmesszelle (2) nach Anspruch 1 oder 2, **dadurch gekennzeichnet, dass** die Leiter (281, 282, 283), gegebenenfalls mittels eines Klebstoffs, mit dem Kraftaufnehmer (20) thermisch gekoppelt sind.

4. Kraftmesszelle (2) nach Anspruch 1, 2 oder 3, **dadurch gekennzeichnet, dass** die Leiter in wenigstens einem Flachbandkabel (22_{T}, 22_{B}) geführt werden, das ein mit den Leiterbahnen (281, 282, 283) bedrucktes flexibles Band oder eine Folie ist.

5. Kraftmesszelle (2) nach Anspruch 1, 2, 3 oder 4, **dadurch gekennzeichnet, dass** die Verbindungsleitungen zu den Anschlüssen (280) der Sensoren (28_{TF}, 28_{TB}, 28_{BF}, 28_{BB}) aus Teilabschnitten (281_{TF}, 282_{TF}, 283_{TF}; 281_{TB}, 282_{TB}, 283_{TB}; ...) bestehen, von denen einzelne gegebenenfalls für wenigstens zwei Sensoren (28_{TF}, 28_{TB}, 28_{BF}, 28_{BB}) gemeinsam genutzt werden.

6. Kraftmesszelle (2) nach einem der Ansprüche 1 bis 5, **dadurch gekennzeichnet, dass** auf wenigstens einem flexiblen Band (22_{T}; 22_{B}) je zwei an verschiedene Sensoren (28_{TF}, 28_{TB}) angeschlossene Leiterbahnen (282_{TF}, 282_{BF}, ...) zu einem Knotenpunkt (K1; K2) der Messbrücke zusammengeführt sind, der mittels einer einzigen Leitung (281_{T}) mit dem Schaltungsmodul (24) verbunden ist.

7. Kraftmesszelle (2) nach einem der Ansprüche 1 bis 6, **dadurch gekennzeichnet, dass** die auf einer ersten Seite des Verformungskörpers (20) angeordneten Sensoren (28_{TF}, 28_{TB}) mit einem ersten Flachbandkabel (22_{T}) und die auf einer zweiten Seite des Verformungskörpers (20) angeordneten Sensoren (28_{BF}, 28_{BB}) mit einem zweiten Flachbandkabel (22_{B}) verbunden sind.

8. Kraftmesszelle (2) nach einem der Ansprüche 1 bis 7, **dadurch gekennzeichnet, dass** ein als Temperaturfühler ausgestalteter auf dem Verformungskörper (20) angeordneter Sensor (29) an Leiterbahnen (291, 292) eines der Flachbandkabel (22_{T}) angeschlossen ist.

9. Kraftmesszelle (2) nach einem der Ansprüche 1 bis 8, **dadurch gekennzeichnet, dass** die Flachbandkabel (22_{T}, 22_{B}) an deren Enden derart mit einer Ausnehmung (224) versehen sind, dass der Bereich zwischen den Anschlusskontakten (221) der Sensoren (28_{TF}, 28_{TB}, 28_{BF}, 28_{BB}) frei zugänglich ist und daher gut gereinigt werden kann.

10. Kraftmesszelle (2) nach einem der Ansprüche 1 bis 9, **dadurch gekennzeichnet, dass** Kraftaufnehmer (20) mechanisch und thermisch mit dem mittels des wenigstens einen Flachbandkabels (22_{T}, 22_{B}) an die Sensoren (28_{TF}, 28_{TB}, 28_{BF}, 28_{BB}, 29) angeschlossenen Schaltungsmodul (24) gekoppelt ist, welches ein Speichermodul (245) für Kompensationsdaten sowie wenigstens eine zur Wandlung der von den Sensoren (28_{TF}, 28_{TB}, 28_{BF}, 28_{BB}, 29) abgegebenen analogen Signale dienende Wandlerschaltung (243, 244) aufweist.

11. Waage (1) mit einer Kraftmesszelle (2) nach einem der Ansprüche 1-10.

## Claims

1. Force-measuring cell (2) with a force transducer (20) comprising a deformable body (207) that is equipped with sensors (28_{TF}, 28_{TB}, 28_{BF}, 28_{BB}) consisting in particular of strain gauges, said deformable body connecting a housing-mounted fixed part (208) of the force transducer (20) with a force-introducing part (206) of the force transducer (20), wherein the sensors (28_{TF}, 28_{TB}, 28_{BF}, 28_{BB}) are connected to electrical conductors (281, 282, 283) which, in turn, can be connected to a circuit module (24) that serves to process the measuring signals, **characterized in that** the circuit module (24) is coupled to the force transducer (20) but set apart from the deformable body (207), that connections for joining the sensors (28_{TF}, 28_{TB}, 28_{BF}, 28_{BB}) together in a measuring bridge circuit are arranged on the circuit module (24), and that the conductors (281, 282, 283) are designed so that all connector leads from the nodal points (K1, ...., K4) of the measuring bridge circuit to the connector terminals (280) of the strain gauges (28_{TF}, 28_{TB}, 28_{BF}, 28_{BB}) have substantially equal resistance values.

2. Force-measuring cell (2) according to claim 1, **characterized in that** conductors of different length have different conductive cross-sections at least over segments of their lengths, wherein the conductive cross-sections of longer conductors are larger than the conductive cross-sections of short conductors.

3. Force-measuring cell (2) according to claim 1 or 2, **characterized in that** the conductors (281, 282, 283) are thermally coupled to the force transducer (20), wherein the coupling may be achieved by means of an adhesive.

4. Force-measuring cell (2) according to claim 1, 2 or 3, **characterized in that** the conductors are routed through at least one flat ribbon cable (22_{T}, 22_{B}) consisting of a flexible ribbon or foil on which the conductor tracks (281, 282, 283) are printed.

5. Force-measuring cell (2) according to claim 1, 2, 3 or 4, **characterized in that** the connecting leads to the terminals (280) of the sensors (28_{TF}, 28_{TB}, 28_{BF}, 28_{BB}) consist of partial segments (281_{TF}, 282_{TF}, 283_{TF}; 281_{TB}, 282_{TB}, 283_{TB}; ...), wherein individual ones of said partial segments may be used in common for at least two of the sensors (28_{TF}, 28_{TB}, 28_{BF}, 28_{BB}).

6. Force-measuring cell (2) according to one of the claims 1 to 5, **characterized in that** at least one flexible ribbon (22_{T}; 22_{B}) contains a nodal point (K1; K2) of the measuring bridge circuit where conductor tracks (282_{TF}, 282_{BF}, ...) from two different sensors (28_{TF}, 28_{BF}) are joined together in a single conductor track (281_{T}) leading to the circuit module (24).

7. Force-measuring cell (2) according to one of the claims 1 to 6, **characterized in that** the sensors (28_{TF}, 28_{TB}) arranged on a first side of the deformable body (20) are connected to a first flat ribbon cable (22_{T}) and the sensors (28_{BF}, 28_{BB}) arranged on a second side of the deformable body (20) are connected to a second flat ribbon cable (22_{B}).

8. Force-measuring cell (2) according to one of the claims 1 to 7, **characterized in that** a sensor (29) that is configured as a temperature sensor and arranged on the deformable body (20) is connected to conductor tracks (291, 292) of one of the flat ribbon cables (22_{T}).

9. Force-measuring cell (2) according to one of the claims 1 to 8, **characterized in that** the flat ribbon cables (22_{T}, 22_{B}) have a cutout (224) arranged at their ends, said cutout being configured in such a manner that the area between the contact terminals (221) of the sensors (28_{TF}, 28_{TB}, 28_{BF}, 28_{BB}) is freely accessible and therefore convenient to clean.

10. Force-measuring cell (2) according to one of the claims 1 to 9, **characterized in that** the force transducer (20) is mechanically and thermally coupled to the circuit module (24), that the circuit module (24) is connected to the sensors (28_{TF}, 28_{TB}, 28_{BF}, 28_{BB}) by means of the least one flat ribbon cable (22_{T}, 22_{B}), and that the circuit module (24) comprises a memory module (245) for compensation data as well as a converter circuit (243, 244) for converting the analog signals delivered by the sensors (28_{TF}, 28_{TB}, 28_{BF}, 28_{BB}).

11. Weighing scale (1) with a force-measuring cell (2) according to one of the claims 1 to 10.

## Revendications

1. Cellule dynamométrique (2) comprenant un capteur de force (20), qui présente un corps de déformation (207) doté de capteurs (28_{TT}, 28_{TB}, 28_{BF}, 28_{BB}), en particulier de jauges extensométriques, qui relie une partie (208), pouvant être montée de façon solidaire du boîtier, du capteur de force (20) avec sa partie (206) servant à l'application de force, les capteurs (28_{TF}, 28_{TB}, 28_{BF}, 28_{BB}) étant reliés à des conducteurs (281, 282, 283) électriques, qui peuvent être raccordés à un module de circuit (24) servant au traitement des signaux de mesure, **caractérisée en ce que** le module de circuit (24) est couplé au capteur de force (20) de façon décalée par rapport au corps de déformation (207), les capteurs (28_{TF}, 28_{TB}, 28_{BF}, 28_{BB}) sont interconnectés dans le module de commutation (24) pour former un pont de mesure et les conducteurs (281, 282, 283) sont conçus de telle sorte que toutes les lignes de liaison résultantes présentent la même valeur de résistance depuis les points nodaux (K1,..., K4) du pont de mesure jusqu'aux branchements (280) des capteurs (28_{TF}, 28_{TB}, 28_{BF}, 28_{BB}).

2. Cellule dynamométrique (2) selon la revendication 1, **caractérisée en ce que** des conducteurs de longueurs différentes présentent au moins par endroits, différentes sections de ligne, les sections de lignes des conducteurs plus longs étant plus grandes que celles des conducteurs plus courts.

3. Cellule dynamométrique (2) selon la revendication 1 ou 2, **caractérisée en ce que** les conducteurs (281, 282, 283) sont couplés thermiquement éventuellement au moyen d'une colle, au capteur de force (20).

4. Cellule dynamométrique (2) selon la revendication 1, 2 ou 3, **caractérisée en ce que** les conducteurs sont guidés dans au moins un câble plat (22_{T}, 22_{B}), qui est une bande flexible imprimée avec les pistes conductives (281, 282, 283) ou est un film.

5. Cellule dynamométrique (2) selon la revendication 1, 2, 3 ou 4, **caractérisée en ce que** les lignes de liaison allant aux branchements (280) des capteurs (28_{TF}, 28_{TB}, 28_{BF}, 28_{BB}) se composent de tronçons partiels (281_{TF}, 282_{TF}, 283_{TF}, 281T_{B}, 282_{TB}, 283_{TB};...) dont certains sont utilisés conjointement éventuellement pour au moins deux capteurs (28_{TF}, 28_{TS}, 28_{BF}, 28_{BB}).

6. Cellule dynamométrique (2) selon l'une quelconque des revendications 1 à 5, **caractérisée en ce que**, sur au moins une bande (22_{T}, 22_{B}) flexible, à chaque fois deux pistes conductives (282_{TF}, 282_{BF},...) raccordées à différents capteurs (28_{TF}, 28_{TB}) sont guidées ensemble vers un point nodal (K₁ ; K₂) du pont de mesure, qui est relié au moyen d'une ligne (281_{T}) unique au module de circuit (24).

7. Cellule dynamométrique (2) selon l'une quelconque des revendications 1 à 6, **caractérisée en ce que** les capteurs (28_{TF}, 28_{TB}) disposés sur un premier côté du corps de déformation (20) sont reliés à un premier câble plat (22_{T}) et les capteurs (28_{BF}, 28_{BB}) disposés sur un second côté du corps de déformation (207) sont reliés à un second câble plat (22_{B}).

8. Cellule dynamométrique (2) selon l'une quelconque des revendications 1 à 7, **caractérisée en ce qu'**un capteur (29) conçu comme sonde de température (29) et disposé sur le corps de déformation (20) est raccordé à des pistes conductives (291, 292) de l'un des câbles plats (22_{T}).

9. Cellule dynamométrique (2) selon l'une quelconque des revendications 1 à 8, **caractérisée en ce que** les câbles plats (22_{T}, 22_{B}) sont dotés sur leurs extrémités d'une cavité (224) de telle sorte que la zone entre les contacts de branchement (221) des capteurs (28_{TF}, 28_{TB}, 28_{BF}, 28_{BB}) est librement accessible et peut donc être nettoyée facilement.

10. Cellule dynamométrique (2) selon l'une quelconque des revendications 1 à 9, **caractérisée en ce que** le capteur de force (20) est couplé mécaniquement et thermiquement au module de circuit (24) raccordé au moyen du au moins un câble plat (22_{T}, 22_{B}) aux capteurs (28_{TF}, 28_{TB}, 28_{BF}, 28_{BB}, 29) qui présente un module de mémoire (245) pour des données de compensation et au moins un circuit convertisseur (243, 244) servant à la conversion des signaux analogiques émis par les capteurs (28_{TF}, 28_{TB}, 28_{BF}, 28_{BB}, 29).

11. Balance (1) avec une cellule dynamométrique (2) selon l'une quelconque des revendications 1 à 10.
